# EUROPEAN PATENT APPLICATION

(11) **EP 3 239 385 A1**
(43) Date of publication of application: **01.11.2017**
(21) Application number: 15871908.8
(22) Date of filing: 18.12.2015
(51) Int. Cl.: D06F 39/12, D06F 37/12

(54) **WASHING MACHINE**

(30) Priority: 25.12.2014 JP 2014262989
(71) Applicant: Haier Asia Co., Ltd, Tokyo 100-0005 (JP); Qingdao Haier Washing Machine Co. Ltd., Qingdao, Shandong 266101 (CN)
(72) Inventor: ONISHI, Takashi, Tokyo 100-0005 (JP); OE, Katsumi, Tokyo 100-0005 (JP); BAMBA, Yoshikazu, Tokyo 100-0005 (JP); HONDA, Kunioki, Tokyo 100-0005 (JP); YONEZAWA, Takaaki, Tokyo 100-0005 (JP)
(74) Representative: Zacco Sweden AB
(86) International application number: PCT/CN2015/097813
(87) International publication number: WO 2016/101840

(57) **Abstract**

A washing machine (1) is provided. The washing machine (1) includes a washing machine body (2) provided with a window portion (24) at a front plate (2a); an outer drum (3) arranged in the washing machine body (2) and having at least a transparent area (32) formed by a transparent member at a portion corresponding to the window portion (24); a dewatering drum (4) rotatably arranged in the outer drum (3); a motor (61) configured to rotate to drive the dewatering drum (4); and a drum cleaning unit (7) arranged between the outer drum (3) and the dewatering drum (4) and disposed at a position corresponding to the window portion (24) and the transparent area (32) and capable of abutting against an outer surface (40) of the dewatering drum (4). According to the washing machine, a state of the outer surface of the dewatering drum can be observed without disassembling the washing machine, and the timing for cleaning the drum can be easily determined. Moreover, a cleaning condition of the drum can be observed, and a cleaning effect of the drum can be easily known.

## Description

### TECHNICAL FIELD

The present disclosure relates to a washing machine capable of learning about a cleaning condition on an outer surface of a dewatering drum from an outer side of a body of a washing machine.

### BACKGROUND

Generally, washings and detergents are thrown into a dewatering drum rotatably accommodated in an outer drum of a washing machine to begin to wash. Water supplied into the dewatering drum flows towards the outer drum via a plurality of water through holes formed in the dewatering drum. Therefore, an outer surface of the dewatering drum is in a state of being immersed in washing water and rinsing water during a washing process. Moreover, after dewatering, dirt attached to the washings and a portion of detergent residues may also remain accumulated at the outer surface of the dewatering drum and are used as a nutrient source to generate mold (mainly black mold) at the outer surface of the dewatering drum.

As for an ordinary washing machine, it is hard to learn about the state of the outer surface of the dewatering drum without detaching the dewatering drum from the body of the washing machine body. However, the dewatering drum is connected with a motor served as a rotational drive mechanism, and is difficult to be detached by a user.

Therefore, the dirt and mold on the outer surface of the dewatering drum are generally removed through a chemical method by throwing anti-mold preservative for cleaning the drum into the washing machine and performing a washing operation in, for example, a drum cleaning mode. However, in view of water pollution caused by the anti-mold preservative, economic efficiency, removal efficiency of the dirt and the like, a mechanical method is better than the chemical method realized through the anti-mold preservative.

As the mechanical method for cleaning the dewatering drum, patent literature 1 discloses a washing machine having a brush for cleaning an outer surface of a dewatering drum. In the washing machine disclosed in patent literature 1, a dewatering drum which is circular viewed from the top is arranged in an outer drum which is rectangular viewed from the top, and a brush abutted against the outer surface of the dewatering drum is arranged at a corner of the outer drum forming a dead corner.

### Related Technical Literature

### Patent literature

Patent literature 1: Japanese Patent application Laid-Open No. 6-47188

### Problems to be solved

However, as for the washing machine disclosed in patent literature 1, it is hard to learn about the state of the outer surface of the dewatering drum without detaching the dewatering drum from the body of the washing machine. Accordingly, a dirty condition of the dewatering drum cannot be easily known, and thus it is difficult to determine the time for cleaning the dewatering drum. Moreover, the drum cleaning process performed by the brush cannot be directly observed, and it is inconvenient to learn about the drum cleaning effect.

### SUMMARY

The present disclosure aims to effectively solve such problems, and specifically, aims to provide a washing machine capable of observing a state of an outer surface of a dewatering drum without disassembling the washing machine, capable of easily determining the time for cleaning the drum, capable of observing the cleaning condition of the drum and capable of easily learning about a cleaning effect of the drum.

### Solution for solving problems

In order to achieve related objective, the present disclosure adopts the following solution.

That is, a washing machine of the present disclosure includes: a washing machine body, a side plate of the washing machine body is provided with a window portion; an outer drum, the outer drum is arranged in the washing machine body, and has at least a transparent area formed by a transparent member at a portion corresponding to the window portion; a dewatering drum rotatably arranged in the outer drum; a motor, configured to rotate to drive the dewatering drum; and a drum cleaning unit, the drum cleaning unit is arranged between the outer drum and the dewatering drum and disposed at a position corresponding to the window portion and the transparent area, and is capable of abutting against an outer surface of the dewatering drum.

Furthermore, the present disclosure preferably adopts a structure as follows: the drum cleaning unit includes a supporting shaft portion extending along a direction parallel to a rotating shaft of the dewatering drum; and a brush portion separately arranged in a direction orthogonal to the rotating shaft relative to the supporting shaft portion; and the washing machine includes an abutting/separating unit configured to cause the drum cleaning unit to rotate about the supporting shaft portion, so as to make the drum cleaning unit in an abutted state or a separated state, the abutted state refers to a state that the brush portion abuts against the outer surface of the dewatering drum, and the separated state refers to a state that the brush portion is separated from the outer surface of the dewatering drum.

Further, the present disclosure preferably adopts a structure as follows: the abutting/separating unit includes a torque motor, and a driving force for driving the drum cleaning unit to rotate is applied by the torque motor.

Specifically, the present disclosure preferably adopts a structure as follows: the drum cleaning unit includes a connection portion connecting the brush portion and the supporting shaft portion, a water path having a main stream portion and a plurality of injection portions is formed in the connection portion, the main stream portion is gradually reduced in diameter from a start end to a tail end, and extends along the direction parallel to the rotating shaft of the dewatering drum, and the plurality of injection portions open from the main stream portion to the brush portion and are formed at a plurality of positions along the direction parallel to the rotating shaft of the dewatering drum respectively, and the washing machine includes a water supply unit for supplying water to the main stream portion from the start end.

Furthermore, the present disclosure preferably adopts a structure as follows: the drum cleaning unit is configured to be detachable between the outer drum and the dewatering drum.

Moreover, the present disclosure preferably adopts the structure as follows: at least a portion of the dewatering drum is formed by a transparent member.

### Effects of the disclosure

According to the present disclosure described above, in a state that the drum cleaning unit abuts against the outer surface of the dewatering drum, the motor causes the dewatering drum to rotate, so that the outer surface of the dewatering drum can be cleaned by virtue of the friction of the drum cleaning unit, and the outer surface of the dewatering drum can be known from the outer side of the washing machine body via the window portion of the washing machine body and the transparent area of the outer drum. Therefore, the state of the outer surface of the dewatering drum can be observed without disassembling the washing machine, the timing for cleaning the drum can be easily determined, a cleaning condition of the drum can be observed and a cleaning effect of the drum can be easily known.

Furthermore, according to the present disclosure having the abutting/separating unit, the abutting/separating unit causes the drum cleaning unit to rotate about the supporting shaft portion between an abutting position and a separating position. Thus, a space for accommodating the drum cleaning unit in the washing machine body is small, and the upsizing of the washing machine caused by assembling the drum cleaning unit can be inhibited.

Further, according to the present disclosure that the abutting/separating unit has the torque motor, and compared with a situation that the abutting/separating unit has a stepper motor, the drum cleaning is easier to control.

Specifically, according to the present disclosure that the water path having the main stream portion and the injection portion is formed in the connection portion of the drum cleaning unit, the water is supplied to the water path in the connection portion through the water supply unit, so that the water can be injected from the connection portion at substantially-uniform pressure. Therefore, when the drum is cleaned, the water does not need to be stored in the outer drum, the drum can be cleaned by using little water, and the brush portion can be cleaned while the drum is cleaned by utilizing the water injected from the injection portion.

Furthermore, according to the present disclosure that the drum cleaning unit is detachable between the outer drum and the dewatering drum, the maintenance of the drum cleaning unit can be performed.

Further, according to the present disclosure that at least a portion of the dewatering drum is formed by the transparent member, both the cleaned condition of the dewatering drum and the washed condition of the clothes, and the like in the dewatering drum can be known from the outer side of the washing machine body via the window portion, the transparent area and the dewatering drum.

### BRIEF DESCRIPTION OF DRAWINGS

FIG. 1 is a perspective view illustrating an appearance of a washing machine according to an embodiment of the present disclosure.
FIG. 2 is a longitudinal section view illustrating a rough structure of a washing machine according to the present disclosure.
FIG. 3 is a perspective view illustrating a structure of an outer drum possessed by a washing machine of the present disclosure and peripheries of the outer drum.
FIG. 4 is a diagram illustrating a drum cleaning unit of the washing machine of the present disclosure viewed from an inner side of an outer drum.
FIG. 5 is a longitudinal section view schematically illustrating a drum cleaning unit of the present disclosure.
FIG. 6 is a diagram illustrating displacement of a drum cleaning unit of the present disclosure.
FIG. 7 is a perspective view illustrating a washing machine of the present disclosure with a drum cleaning assembly being removed.
FIG. 8 is block diagram illustrating an electric structure of a washing machine according to the present disclosure.
FIG. 9 is a flow chart illustrating a drum cleaning flow executed by a washing machine according to the present disclosure.
FIG. 10 is a flow chart illustrating a disassembling/assembling flow of the drum cleaning assembly.
FIG. 11 is a local perspective view illustrating a modification example of a washing machine of the present disclosure.

### A list of reference numerals:

1, 1A: washing machine
2: washing machine body
2a: side plate (front plate)
3: outer drum
4: dewatering drum
7: drum cleaning unit
8: abutting/separating unit
9: water supply unit
24: window portion
32: transparent area
61: motor
40: outer surface of the dewatering drum
70: supporting shaft portion
71: brush portion
72: connection portion
78: water path
78a: main stream portion
78b: injection portion
78a1: start end of main stream portion
78a2: tail end of main stream portion
80: torque motor
S: rotating shaft of the dewatering drum
ϕ1 to ϕ3: diameter of the main stream portion

### DETAILED DESCRIPTION

Embodiments of the present disclosure are described below with reference to drawings.

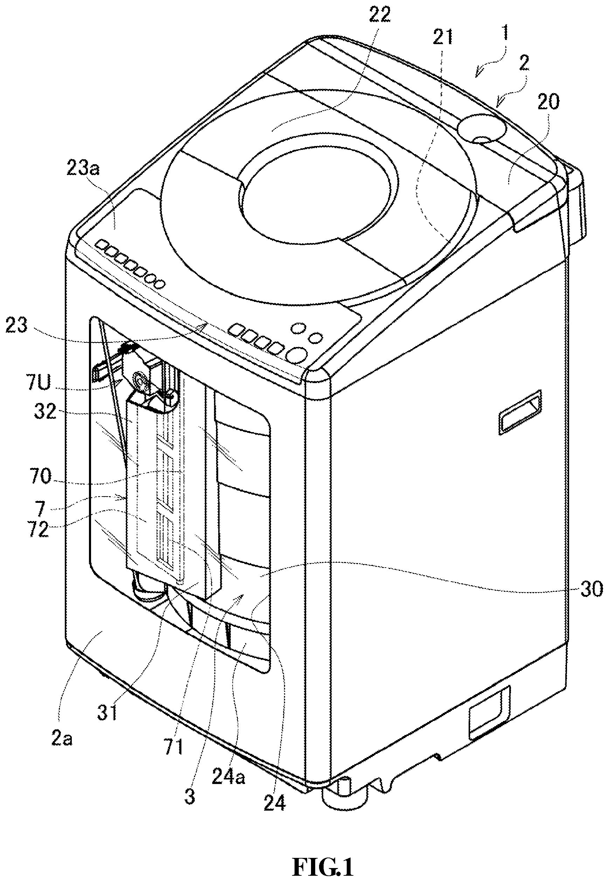

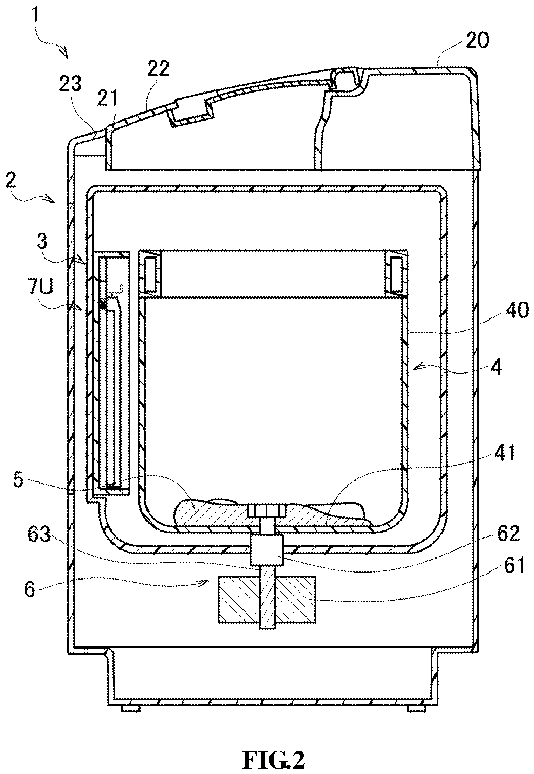

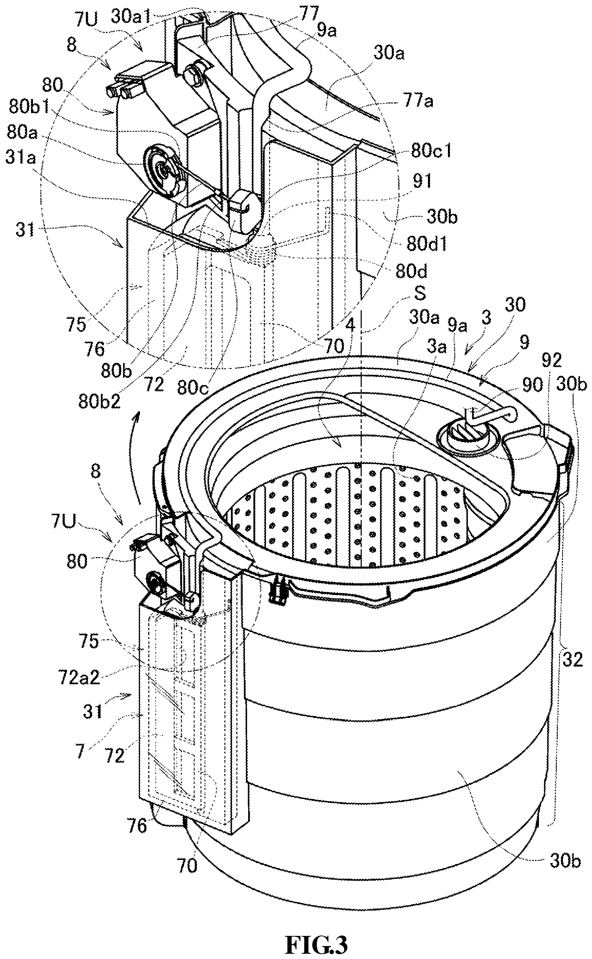

FIG. 1 is a perspective view illustrating an appearance of a vertical washing machine 1 (hereinafter referred to as "washing machine") according to an embodiment of the present disclosure. FIG. 2 is a longitudinal section view illustrating a rough structure of the washing machine 1 according to the present embodiment. FIG. 3 is a perspective view illustrating a structure of an outer drum 3 and peripheries of the outer drum 3.

The washing machine 1 includes a washing machine body 2, an outer drum 3, a dewatering drum 4, a driving apparatus 6, a drum cleaning assembly 7U, a water supply unit 9 (referring to FIG. 3) and a control portion served as a control unit described below.

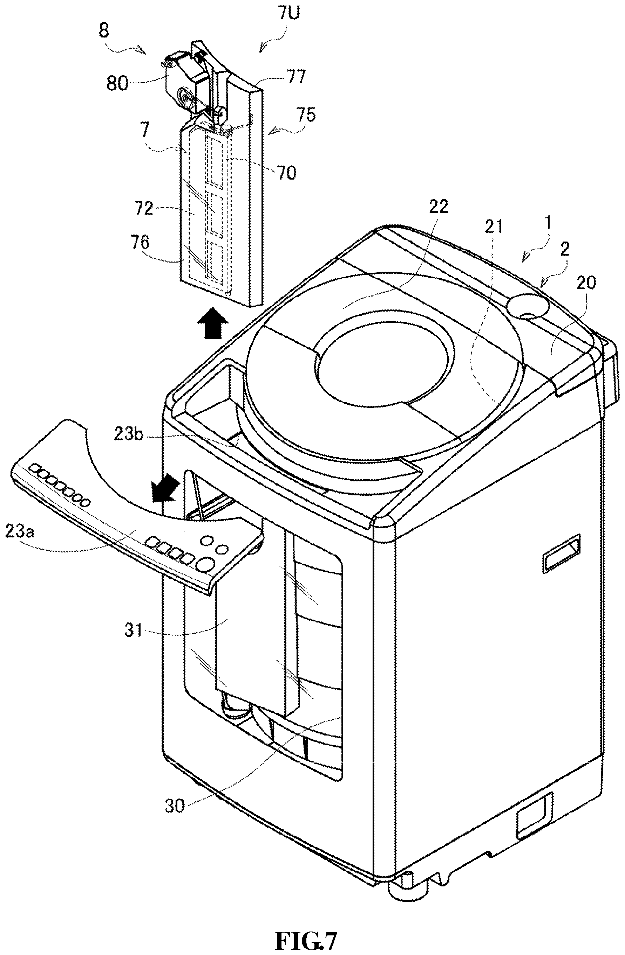

The washing machine body 2 is of an approximately cuboid shape and is configured as follows: an opening 21 and an upper cover 22 for opening and closing the opening 21 are provided on an upper surface 20 of the washing machine body 2. Clothes as washings can be thrown into/taken out of the dewatering drum 4 via the opening 21 by opening the upper cover 22. The upper surface 20 of the washing machine body 2 is further provided with an input portion 23 formed by a control board 23a having an operation starting button, a drum cleaning mode button described below and the like. The control board 23a is configured to be detachable from the washing machine body 2 (referring to FIG. 7). Moreover, a front plate 2a served as a side plate of the washing machine body 2 is formed with an approximately rectangular window portion 24 in which a transparent member is embedded. The transparent member is made of polyethylene terephthalate (PET), polyethylene naphthalate (PEN), polycarbonate (PC) and the like.

As shown in FIG. 3, the outer drum 3 is configured inside the washing machine body 2, and is an approximately cylindrical component with a bottom. The outer drum 3 is capable of storing water, and has an outer drum body 30 and an accommodating portion 31 for accommodating the drum cleaning assembly 7U.

The outer drum body 30 is of a bottomed cylindrical shape, and a portion of a side surface 30b and the upper surface 30a is cut to form a notch along a direction parallel to a rotating shaft S of the dewatering drum 4.

The accommodating portion 31 is protruded from a notch end 30a1 of the side surface 30b to a radial outside of the outer drum main body 30. The accommodating portion 31 is substantially of a rectangular shape in the top view. Furthermore, a notch 31a is formed at the upper end of the accommodating portion 31, so that a torque motor 80 included in the drum cleaning assembly 7U described below is mounted on the accommodating portion 31. Furthermore, a water supply pipe 9a for supplying water to a drum cleaning apparatus in the drum cleaning assembly 7U described below is arranged along the upper surface 30a of the outer drum main body 30. An end 90 of the water supply pipe 9a is disposed near a water supply port 92 for supplying water into the outer drum 3, and the other end 91 of the water supply pipe 9a is disposed at a connection portion with the drum cleaning assembly 7U. The water supply pipe 9a together with a drum cleaning water supply valve 27 form a water supply unit 9.

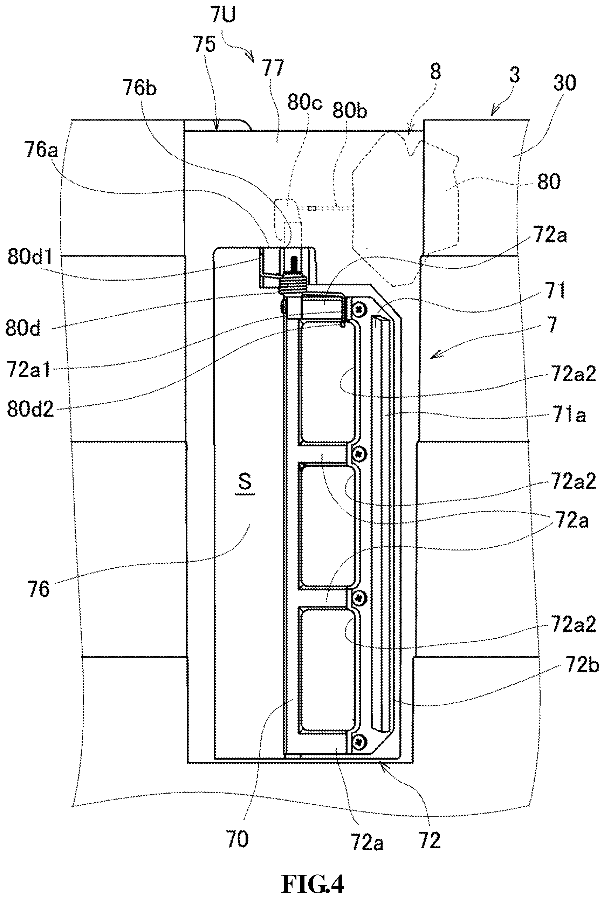

In the present embodiment, the outer drum 3 is almost integrally formed by the transparent member, and a transparent area 32 is formed in a portion corresponding to the window portion 24 of the washing machine body 2. It shall be noted that the portion corresponding to the window portion 24 refers to a portion that can be observed via the window portion 24 from the outer side of the washing machine body 2. FIG. 3 shows the drum cleaning assembly 7U perspective from the accommodating portion 31, and omits illustration of the dewatering drum 4 perspective from the outer drum body 30. This is the same in FIG. 1 and FIG. 4. The transparent member can be made of polyethylene terephthalate (PET), polyethylene naphthalate (PEN), polycarbonate (PC) and the like.

The dewatering drum 4 is a bottomed cylindrical member arranged inside the outer drum 3, and is capable of coaxially rotating with the outer drum 3. A diameter of the dewatering drum 4 is smaller than a diameter of the outer drum 3, and a wall surface of the dewatering drum 4 has a plurality of through holes 3a. In dewatering, water flows outside from a water outlet (not shown) disposed on the outer drum 3 via the through holes 3a. In order to ensure a space for accommodating a drum cleaning unit 7 described below, compared with the dewatering drum generally adopted in a conventional washing machine, a dewatering drum smaller in diameter relative to the dimension of the outer drum 3 is adopted as the dewatering drum 4. Furthermore, the washing machine body 2 (a housing) and the outer drum 3 may also adopt the following structure: compared with the conventional washing machine body and the outer drum, the washing machine body 2 and the outer drum 3 is greater in diameter relative to the dimension of the dewatering drum 4 so as to ensure the space for accommodating the drum cleaning unit 7.

As shown in FIG. 2, an impeller (stirring blade) 5 is rotatably configured at the center of a bottom 41 of the dewatering drum 4. The impeller 5 stirs the water accumulated at the outer drum 3 so as to generate a water flow.

A driving unit 6 includes a motor 61 and a clutch 62. The motor 61 enables the dewatering drum 4 and the impeller 5 to rotate, so that a driving force for causing the washings accommodated in the dewatering drum 4 to rotate is applied.

Specifically, a driving shaft 63 protruding from the bottom 41 of the dewatering drum 4 is driven to rotate by the motor 61, so as to drive the dewatering drum 4 to rotate. Furthermore, a rotating force generated by the motor 61 is applied to the impeller 5 by the switching the clutch 62, so as to drive the impeller 5 to rotate. Therefore, when the washing machine 1 washes the clothes, only the impeller 5 is enabled to rotate, and when in dewatering, the dewatering drum 4 and the impeller 5 are rotated integrally at high speed.

As shown in FIG. 3, the drum cleaning assembly 7U configured between the outer drum 3 and the dewatering drum 4 and configured at a position corresponding to the window portion 24 and the transparent area 32, i.e., the accommodating portion 31 of the outer drum 3, has the drum cleaning unit 7, an abutting/separating unit 8 and an isolating unit 75. One side surface of the isolating unit 75 is provided with the drum cleaning unit 7, the other side surface of the isolating unit 75 is provided with a torque motor 80 of the abutting/separating unit 8; and the isolating unit 75 has a plate portion 77 of an approximately rectangular plate-like base and a protruding portion 76 protruding to the outside of the outer drum 3 from the base plate portion 77 in a radial direction.

The drum cleaning unit 7 will be described in detail below, and abuts against the outer surface 40 of the dewatering drum 4 as shown in FIG. 2. Therefore, when the drum cleaning unit 7 abuts against the outer surface 40 of the dewatering drum 4, the motor 61 drives the dewatering drum 4 to rotate, so that the outer surface 40 of the dewatering drum 4 is cleaned with the friction by the drum cleaning unit 7. Moreover, the drum cleaning unit 7 and the outer surface 40 of the dewatering drum 4 during drum cleaning illustrated with double dot dash lines in FIG. 1 can be known from the outer side of the washing machine body 2 via the window portion 24 of the washing machine body 2 and the transparent area 32 of the outer drum 3. Therefore, the state of the outer surface 40 of the dewatering drum 4 can be observed without disassembling the washing machine 1, and the time for cleaning the drum can be easily determined. Moreover, a cleaning condition of the drum can be observed and a cleaning effect of the drum can be easily known.

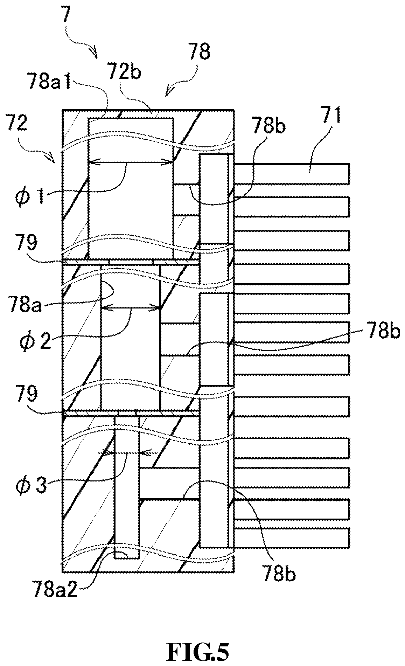

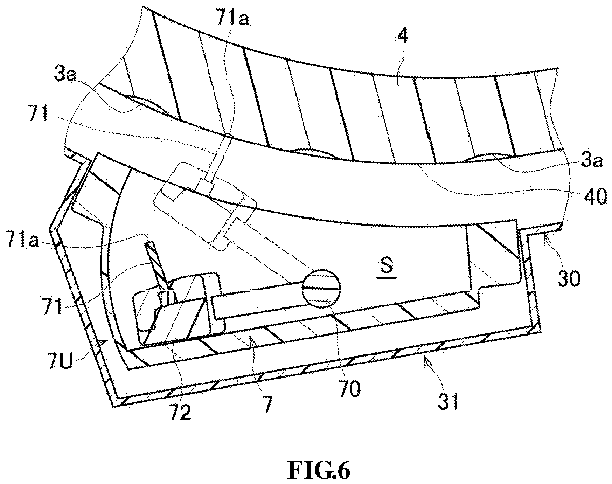

FIG. 4 and FIG. 5 specifically illustrate the structure of the drum cleaning unit 7. FIG. 4 is a diagram illustrating the drum cleaning unit 7 viewed from the inner side of the outer drum 3. FIG. 5 is a longitudinal section view schematically illustrating the drum cleaning unit 7. FIG. 6 is a diagram illustrating displacement of the drum cleaning unit 7. As shown in FIG. 4, the drum cleaning unit 7 has a supporting shaft portion 70, a brush portion 71 and a connection portion 72.

The supporting shaft portion 70 penetrates through a through hole 76b formed in an upper surface 76a of the protruding portion 76 in an accommodating space S formed by the protruding portion 76 of the isolating unit 75, and extends in the direction parallel to the rotating shaft S of the dewatering drum 4, i.e. a vertical direction.

Relative to the supporting shaft portion 70, the brush portion 71 is separately arranged in a direction orthogonal to the direction of the rotating shaft S, i.e. a horizontal direction and extends in the vertical direction.

The connection portion 72 connects the supporting shaft portion 70 and the brush portions 71, and has horizontal portions 72a horizontally extending from multiple positions (4 positions in the present embodiment) in the vertical direction of the supporting shaft portion 70 and a supporting portion 72b connected to the horizontal portions 72a and forming the brush portion 71 on a surface opposite to the dewatering drum 4. The brush portion 71 is formed by a plurality of hairy members (for example, made of nylon) fixed at the supporting portion 72b in a riveting manner. Furthermore, an opening portion 72a2 is formed between such horizontal portions 72a, and the brush portion 71 can be confirmed from the outer side of the washing machine body 2 via the opening portion 72a2.

Furthermore, as shown in FIG. 5, a water path 78 including a main stream portion 78a and a plurality of injection portions 78b is formed in the supporting portion 72b of the connection portion 72. The main stream portion 78a has a diameter ϕ1 to ϕ3 which is gradually reduced from a start end 78a1 to a tail end 78a2, and extends along the direction parallel to the rotating shaft S (referring to FIG. 3) of the dewatering drum 4. The injection portions 78b are opened towards the brush portion 71 from the main stream portion 78a and formed at a plurality of positions along the direction parallel to the rotating shaft S (referring to FIG. 3) of the dewatering drum 4. A plurality of throttling porous plates 79 are separately configured in the middle of the main stream portion 78a, and the diameter of the main stream portion 78a is gradually reduced via the throttling porous plates 79. The water path 78 penetrates through the horizontal portions 72a (referring to FIG. 4) from the start end 78a1 of the main stream portion 78a to extend to the supporting shaft portion 70, and is connected to the other end 91 of the water supply pipe 9a (referring to FIG. 3). The water supplied by the water supply pipe 9a is supplied to the main stream portion 78a from the start end 78a1 and is injected through the injection portion 78b.

Therefore, in the drum cleaning process, by supplying water to the water path 78 having the throttling porous plates 79 from the water supply unit 9, water can be injected from the upper end portion to the lower end portion of the connection portion 72 at substantially-uniform (equal) pressure. Therefore, when the outer surface 40 of the dewatering drum 4 is cleaned, compared with cleaning the drum in the state that the outer drum 3 is filled with water, water can be saved, and the brush portion 71 is cleaned through the water injected from the injection portion 78b.

Returning to FIG. 3, the abutting/separating unit 8 has a spiral spring member (spring) 80d arranged at the upper end of the supporting shaft portion 70 of the drum cleaning unit 7, a torque motor 80 arranged at the upper end of the base plate portion 77, a linear member 80b with one end side 80b1 connected (twined) to a rotating portion 80a of the torque motor 80 and a rotating member 80c with a base end portion 80c1 fixed at the supporting shaft portion 70. The torque motor 80 is arranged at the upper end and the other side of the base plate portion 77, so that the torque motor 80 is prevented from contacting water.

An end 80d1 of the spiral spring member 80d abuts against one side of the base plate portion 77 of the isolating unit 75, and as shown in FIG. 4, the other end side 80d2 is fixed at a fixing slot 72a1 formed at the connection portion 72 of the drum cleaning unit 7. The spiral spring member 80d can press the connection portion 72 towards the base plate portion 77 of the spacer unit 75 through an elastic force.

As shown in FIG. 3, the rotating member 80c is arranged to fix the other end 80b2 of the linear component 80b. When the torque motor 80 drives and rolls up the linear member 80b, the rotating component 80c rotates towards the side of the torque motor 80 with the base end portion 80c1 as a base point. Since the base end portion 80c1 of the rotating member 80c is fixed at the supporting shaft portion 70 of the drum cleaning unit 7, along with the rotation of the rotating member 80c, the supporting shaft portion 70 may also resist the elastic force of the spiral spring member 80d to rotate. Therefore, as shown in FIG. 6, the drum cleaning unit 7 rotates about the supporting shaft portion 70 at a specified angle (about 20 to 60 degrees) from a separated state that the brush portion 71 is separated from the outer surface 40 of the dewatering drum 4. As shown by double dot dash lines in FIG. 3, the displacement occurs in a state that a top end portion 71 a of the brush portion 71 abuts against the outer surface 40 of the dewatering drum 4. When the torque motor 80 stops to drive, the drum cleaning unit 7 in an abutted state is changed to a separated state through the elastic force of the spiral spring member 80d.

Herein, if the drum cleaning unit 7 is always in the abutted state, the conventional washing operation may apply a load to the motor 61. Therefore, except for the drum cleaning, the drum cleaning unit 7 is preferably in the separated state, and preferably, the drum cleaning unit 7 is accommodated in the washing machine 1 in a manner of having displacement. Therefore, as described above, by adopting the structure in which the drum cleaning unit 7 is enabled to rotate about the supporting shaft portion 70 between the abutting position and the separating position by the abutting/separating unit 8, the space for accommodating the drum cleaning unit 7 in the washing machine body 2 is small, so that the upsizing of the washing machine 1 caused by the installation of the drum cleaning unit 7 can be prevented.

Furthermore, the driving force for enabling the drum cleaning unit 7 to rotate is applied by the torque motor 80, so that compared with the situation of using a stepper motor, the microcomputer control is simple. Moreover, different from the situation of using the stepper motor, the dislocation of the drum cleaning unit 7 caused by the rotating and pushing of the dewatering drum 4 does not need to be worried. Therefore, a position sensing unit of the drum cleaning unit 7 is not needed. By adopting the structure that the drum cleaning unit 7 is driven by the torque motor 80 and the spiral spring member 80d to rotate, a program for the drum cleaning process can be executed through the on/off of a power supply of the torque motor 80 and simple microcomputer control, so that cost can be reduced, and development working hours can be reduced.

FIG. 7 is a perspective view illustrating the washing machine 1 with the drum cleaning assembly 7U being removed. As shown in FIG. 7, the above drum cleaning assembly 7U is configured to be detachable from the washing machine body 2 through an insertion opening 23b presented when the control board 23a is removed from the washing machine body 2, and is configured to be capable of maintaining the drum cleaning unit 7. Therefore, the washing machine body 2 is provided with a connector (not shown) for assembling the drum cleaning assembly 7U. In addition, when the drum cleaning assembly 7U is removed, the other end 91 (referring to FIG. 3) of the water supply pipe 9a is detached from the supporting shaft 70.

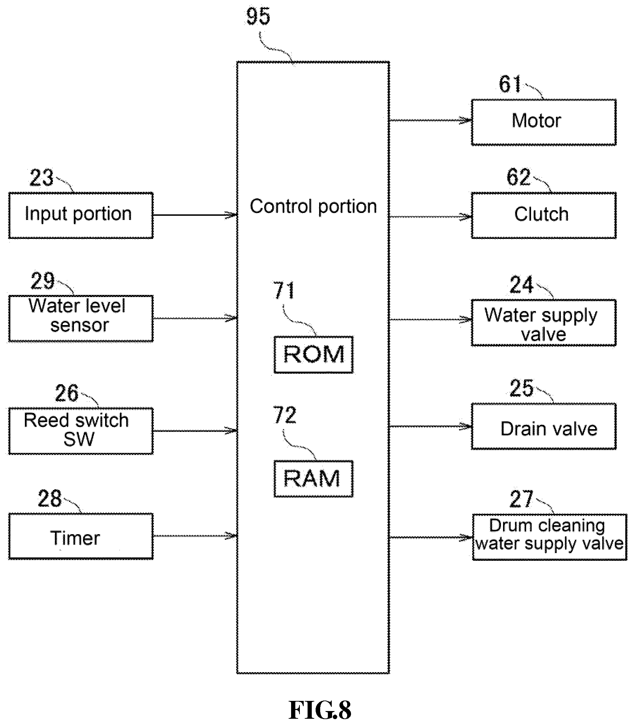

FIG. 8 is a block diagram illustrating an electric structure of the washing machine 1 according to the present embodiment. The action of the washing machine 1 is controlled by a control portion 95 including a microcomputer. The control portion 95 has a ROM71 and a RAM72, and a program stored in the ROM71 is executed through the microcomputer, thereby performing a preset operation action. The RAM72 is configured to temporarily store data used when the above program is executed and the like.

Besides the motor 61 and the clutch 62, the control portion 95 is connected with a water supply valve 24 for supplying water to the outer drum 3, a drain valve 25 for discharging the water in the outer drum 3 and the drum cleaning water supply valve 27 and the like, where the water supply valve, the drain valve and the drum cleaning water supply valve are served as control objects. It shall be noted that, the water supply valve 24, the drain valve 25 and the drum cleaning water supply valve 27 are not shown in FIG. 2.

Furthermore, besides signals from the above input portion 23, signals from a timer 28, a water level sensor 29, a reed switch SW26 and the like are input to the control portion 95. The reed switch SW26 is configured to determine whether the brush portion 71 of the drum cleaning unit 7 contacts the outer surface 40 of the dewatering drum 4.

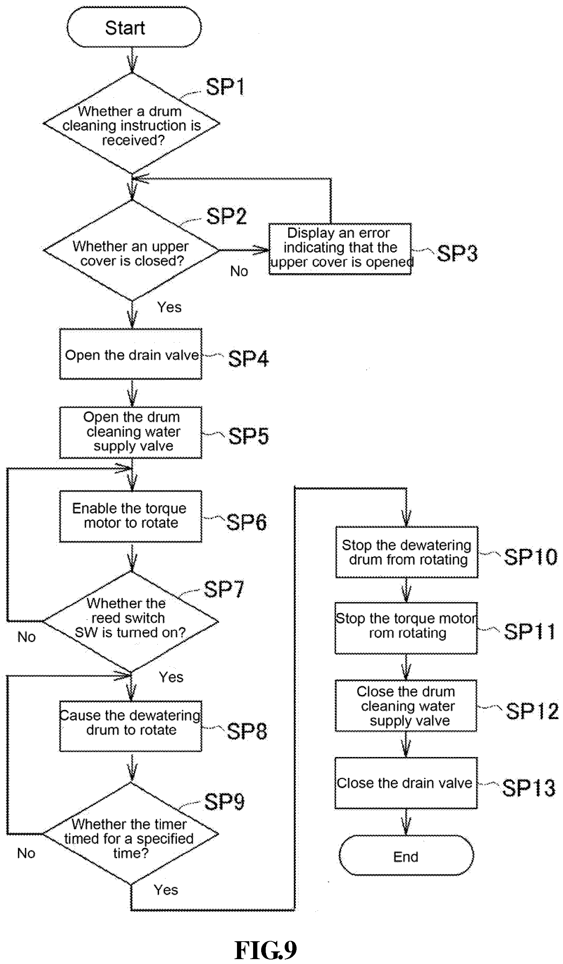

FIG. 9 illustrates a drum cleaning process performed by the washing machine 1 according to the present embodiment. FIG. 9 is a flow chart illustrating a flow of the drum cleaning process.

### <Step SP1>

In step SP1, the control portion 95 determines whether a drum cleaning mode button of the input portion 23 is pressed, and a drum cleaning instruction is input.

### <Step SP2>

In step SP2, when receiving the input drum cleaning instruction, the control portion 95 determines whether the upper cover 22 is closed. The process proceeds to step SP3 when the upper cover is determined to be not closed (step SP2: No), and the process proceeds to step SP4 when the upper cover 22 is determined to be closed (step SP2: yes).

### <Step SP3>

In step SP3, the control portion 95 enables the input portion 23 to display an error indicating that the upper cover 22 is open.

### <Step SP4>

In step SP4, when determining that the upper cover 22 is closed, the control portion 95 enables the drain valve 25 to be opened.

### <Step SP5>

In step SP5, the control portion 95 enables the drum cleaning water supply valve 27 to be opened.

### <Step SP6>

In step SP6, the control portion 95 enables the torque motor 80 to rotate, so as to cause the drum cleaning unit 7 to be in the abutting state shown by the double dot dash lines in FIG. 6 relative to the outer surface 40 of the dewatering drum 4.

### <Step SP7>

In step SP7, the control portion 95 determines whether the reed switch SW26 is changed to be on, thereby determining whether the drum cleaning unit 7 rotates and the electric brush portion 71 abuts against the outer surface 40 of the dewatering drum 4.

### <Step SP8>

In step SP8, when the reed switch SW26 is changed to be on, the control portion 95 inputs a signal to the motor 61 to drive the dewatering drum 4 to rotate. It shall be noted that a rotation speed of the dewatering drum 4 at this moment is lower than the rotation speed of the dewatering drum 4 in dewatering.

Therefore, water is injected via the water inlet path 78 of the drum cleaning unit 7, and the outer surface 40 of the dewatering drum 4 is rubbed by the top end 71 a of the brush portion 71, so that dirt and mold on the outer surface 40 of the dewatering drum 4 are washed away through a mechanical force.

### <Step SP9>

In step SP9, the control portion 95 determines whether the timer 28 has timed for specified time, thereby determining whether a preset drum cleaning timing is reached.

### <Step SP10>

In step SP10, when the timer 28 has timed for the specified time, the control portion 95 inputs a signal to the motor 61 to stop the dewatering drum 4 from rotating.

### <Step SP11>

In step SP11, the control portion 95 causes the torque motor 80 to stop rotating, so as to cause the drum cleaning unit 7 to be separated from the dewatering drum 4.

### <Step SP12>

In step SP12, the control portion 95 causes the drum cleaning water supply valve 27 to be closed.

### <Step SP13>

In step SP13, the control portion 95 causes the drain valve 25 to be closed. So far, the drum cleaning process is ended.

Through such drum cleaning process, the state of the outer surface 40 of the dewatering drum 4 is known by the user via the window portion 24 of the washing machine body 2, and the drum cleaning can be performed at any timing, or the drum cleaning can also be set as that after operation for specified cycling times, a display lamp arranged on the input portion 23 is enabled to display (a timestamp carrying function), and the drum cleaning process is performed at the moment when the user confirms the display of the display lamp. Through the timestamp carrying function, the dirty state of the outer surface 40 of the dewatering drum 4 will not be neglected.

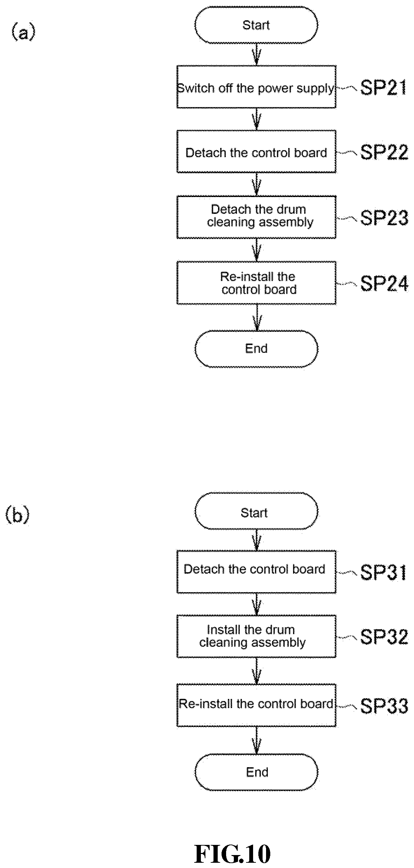

Next, FIG. 10 illustrates a disassembling/assembling process of the drum cleaning unit 7U, for example, for maintenance. FIG. 10 is a flow chart illustrating a flow of replacing the drum cleaning unit 7. FIG. 10(a) is a flow chart illustrating a flow of removing the drum cleaning assembly 7U.

### <Step SP21>

In step SP21, a power supply of the washing machine is switched off.

### <Step SP22>

In step SP22, as shown in FIG. 7, the control board 23a is detached from the washing machine body 2.

### <Step SP23>

In step SP23, the drum cleaning assembly 7U is removed upwards.

### <Step SP24>

In step SP24, the control board 23a is assembled to the washing machine body 2 at an original position of the control board 23a.

Next, FIG. 10(b) is a flow chart illustrating a flow of assembling the drum cleaning assembly 7U.

### <Step SP31>

In step SP31, as shown in FIG. 7, the control board 23a is detached from the washing machine body 2.

### <Step SP32>

In step SP32, the drum cleaning assembly 7U is assembled to the washing machine body 2 from top.

### <Step SP33>

In step SP33, the control board 23a is assembled to the washing machine body 2.

It shall be noted that a specific solution of each portion is not limited to the above embodiments.

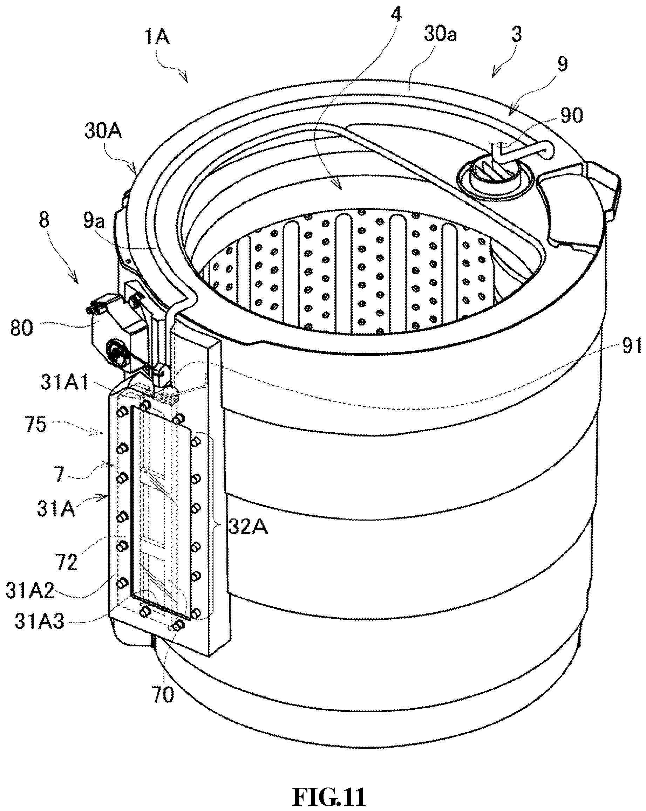

For example, in the present embodiment, the drum cleaning unit 7 as the drum cleaning assembly 7U can be detached from the washing machine body 2. Alternatively, the drum cleaning unit 7 may also adopt a structure of the washing machine 1A shown in FIG. 11 in which the drum cleaning unit 7 cannot be detached from the washing machine body 2. FIG. 11 is a perspective view illustrating the washing machine 1A according to a modification example. FIG. 11 illustrates the outer drum 3 of the washing machine 1A and peripheries of the outer drum 3.

Specifically, the upper portion of the accommodating portion 31A of the outer drum 3 is not opened, but the accommodating portion 3A is integrally formed with the outer drum body 30A. The torque motor 80 is assembled at the upper end of the outer drum 3. Furthermore, the isolating unit 75 shown in FIG. 3 is not arranged, and a through hole (not shown) communicating the water supply pipe 9a and the supporting shaft portion 70 of the drum cleaning unit 7 is formed on the upper surface 31A1 of the accommodating portion 31A. The through hole is necessary for transferring a driving force of the torque motor 80 arranged at the outer surface of the outer drum 3 to the drum cleaning unit 7 arranged at the inner side of the outer drum 3; and by forming the through hole at the upper portion of the outer drum 3, a water leakage risk from the outer drum 3 via the through hole can be reduced.

Moreover, the front plate 31A2 of the accommodating portion 31A, i.e. the portion corresponding to the window portion 24 (referring to FIG. 1) of the washing machine body 2, is formed by the transparent member, and the transparent area 32A perspective to the drum cleaning unit 7 and the outer surface 40 of the dewatering drum 4 is formed through the transparent member. The transparent area 32A is an area formed by embedding the transparent member into the opening window 31A3 opened at the front plate 31A2 of the accommodating portion 31A.

Furthermore, in the present embodiment, the dewatering drum 4 is formed by a non-transparent member, and a structure that at least a portion of the dewatering drum 4 is formed by the transparent member can also be adopted. The transparent member can be made of polyethylene terephthalate (PET), polyethylene naphthalate (PEN), polycarbonate (PC) and the like.

Thus, not only the outer surface 40 of the dewatering drum 4 and the drum cleaning unit 7, but also the washed condition of the washings in the dewatering drum 4 can be known from the outer side of the washing machine body 2 through the window portion 24, the transparent area 32 and the dewatering drum 4, and water level adjustment during washing and the rinsing confirmation can also be performed.

Furthermore, in the case of adopting the structure that the window portion is formed at the dewatering drum 4 and the transparent member is embedded into the window portion, the reed switch SW, Hall IC and the like perform the control in such a manner that the position of the window portion of the dewatering drum 4 always corresponds to the window portion 24 of the washing machine body 2 in temporary stop and washing ended.

Furthermore, in the above embodiment, the brush portion 71 is formed by a plurality of hairy members. However, the brush portion is not limited to the hairy members and can also be other members such as sponge materials, fiber members and the like as long as the structure can abut against the outer surface 40 of the dewatering drum 4 to remove dirt.

Furthermore, in the present embodiment, the abutting/separating unit 8 is a structure with the torque motor 80 and may also be a structure with other motors such as a stepper motor.

Moreover, the drum cleaning unit 7 is not limited to the structure from which the water is injected, and may also adopt the structure that the drum cleaning process is performed in a state that the outer drum 3 stores water. Furthermore, the drum cleaning unit 7 may also be a non-rotating structure.

Furthermore, in the present embodiment, the window portion 24 is formed at the front plate 2a of the washing machine body 2, but not limited to the front plate 2a, may also be formed at a transverse plate, and may also be formed at the front plate 2a and the transverse plate. Moreover, the shape of the window portion 24 is not limited to the general rectangle and may also be an oval shape.

Moreover, in the present embodiment, the drum cleaning unit 7 is applicable to the vertical washing machine 1, but such drum cleaning unit 7 is also applicable to drum washing machines.

Various variations can be made to other structures without going beyond a scope of technical spirit of the present disclosure.

## Claims

1. A washing machine, comprising:
a washing machine body, wherein a side plate of the washing machine body is provided with a window portion;
an outer drum, wherein the outer drum is arranged in the washing machine body, and has at least a transparent area formed by a transparent member at a portion corresponding to the window portion;
a dewatering drum rotatably arranged in the outer drum;
a motor, configured to rotate to drive the dewatering drum; and
a drum cleaning unit, wherein the drum cleaning unit is arranged between the outer drum and the dewatering drum and disposed at a position corresponding to the window portion and the transparent area, and is capable of abutting against an outer surface of the dewatering drum.

2. The washing machine according to claim 1, wherein
the drum cleaning unit comprises a supporting shaft portion extending along a direction parallel to a rotating shaft of the dewatering drum; and a brush portion separately arranged in a direction orthogonal to the rotating shaft relative to the supporting shaft portion; and
the washing machine comprises an abutting/separating unit configured to cause the drum cleaning unit to rotate about the supporting shaft portion, so as to make the drum cleaning unit in an abutted state or a separated state, wherein the abutted state refers to a state that the brush portion abuts against the outer surface of the dewatering drum, and the separated state refers to a state that the brush portion is separated from the outer surface of the dewatering drum.

3. The washing machine according to claim 2, wherein the abutting/separating unit comprises a torque motor, and a driving force for driving the drum cleaning unit to rotate is applied by the torque motor.

4. The washing machine according to claim 2 or 3, wherein
the drum cleaning unit comprises a connection portion connecting the brush portion and the supporting shaft portion,
a water path having a main stream portion and a plurality of injection portions is formed in the connection portion, wherein the main stream portion is gradually reduced in diameter from a start end to a tail end, and extends along the direction parallel to the rotating shaft of the dewatering drum, and the plurality of injection portions open from the main stream portion to the brush portion and are formed at a plurality of positions along the direction parallel to the rotating shaft of the dewatering drum respectively, and
the washing machine comprises a water supply unit for supplying water to the main stream portion from the start end.

5. The washing machine according to any one of claims 1 to 3, wherein the drum cleaning unit is configured to be detachable between the outer drum and the dewatering drum.

6. The washing machine according to any one of claims 1 to 3, wherein at least a portion of the dewatering drum is formed by a transparent member.
